Europäisches Patentamt

(19) European Patent Office

Office européen des brevets

(11) EP 0 522 906 B1

## (12) FASCICULE DE BREVET EUROPEEN

(45) Date de publication et mention
de la délivrance du brevet:
**19.08.1998 Bulletin 1998/34**

(21) Numéro de dépôt: **92401731.2**

(22) Date de dépôt: **19.06.1992**

(51) Int. Cl.⁶: $A01N\ 25/14$, $A01N\ 37/40$, $A01N\ 43/70$, $A01N\ 33/18$, $A01N\ 41/06$, $A01N\ 47/30$, $A01N\ 47/36$
// (A01N37/40, 25:14),
(A01N43/70, 25:14),
(A01N33/18, 25:14),
(A01N41/06, 25:14),
(A01N47/30, 25:14),
(A01N47/36, 25:14)

(54) **Poudres mouillables herbicides et leur procédé de préparation**

Herbizide benetzbare Pulver und ihre Herstellung

Herbicidal wettable powders and methods of preparation

(84) Etats contractants désignés:
**AT DE ES FR NL**

(30) Priorité: **20.06.1991 FR 9107592**

(43) Date de publication de la demande:
**13.01.1993 Bulletin 1993/02**

(73) Titulaire: **CFPI AGRO**
**92233 Gennevilliers (FR)**

(72) Inventeurs:
- **Schapira, Joseph**
**F-75015 Paris (FR)**
- **Schild, Jacques**
**F-92230 Gennevilliers (FR)**
- **Pecheur, Jacques**
**F-92400 Courbevoie (FR)**
- **Guerin, Ange Claude**
**F-95130 Le Plessis Bouchard (FR)**
- **Ambrosi, Dominique**
**F-92400 Courbevoie (FR)**
- **Fuchs, Jean-Jacques**
**F-95170 Deuil la Barre (FR)**
- **Guyenet, Bernard**
**F-78600 Le Mesnil le Roi (FR)**

(74) Mandataire: **Koch, Gustave et al**
**Cabinet PLASSERAUD**
**84, rue d'Amsterdam**
**75440 Paris Cédex 09 (FR)**

(56) Documents cités:
BE-A- 662 006       FR-A- 1 573 875
GB-A- 995 383       US-A- 3 796 562
US-A- 4 310 520

## Description

La présente invention a pour objet des poudres mouillables herbicides du genre de celles comportant au moins une matière active herbicide, solide à la température ambiante.

Elle vise également un procédé de préparation des susdites poudres.

Par l'expression "poudre mouillable", on désigne des matières pulvérulentes qui, mélangées à l'eau, fournissent des suspensions stables.

Ces suspensions sont désignées par le terme de "bouillies".

On connait déjà des poudres mouillables herbicides comportant, sous forme pulvérulente, en mélange, au moins une matière active herbicides solide à la température ambiante et une charge inerte.

Pour la fabrication de ces poudres mouillables herbicides, on a recours à des broyeurs à poudre, par exemple ceux commercialisés par la société FORPLEX, à l'aide desquels on amène la matière active herbicide solide à un degré de division suffisant ; l'inconvénient inhérent à l'utilisation de ces broyeurs réside dans le fait que pour des raisons de protection de l'environnement, il est nécessaire de filtrer de gros volumes d'air indispensables à leur fonctionnement.

Cet inconvénient est encore augmenté lorsqu'on utilise des moulins à air comprimé, connus sous le terme "jet-mill", auxquels il convient d'avoir recours dans les cas où une granulométrie plus fine que celle obtenue avec les susdits broyeurs à poudre est souhaitée.

Il a été proposé de remédier aux inconvénients des susdits broyeurs à poudre en les réglant de façon telle que l'émission de poussière est réduite, mais alors, le broyage est plus grossier et conduit à une mauvaise tenue de la "boullie", c'est-à-dire de la dilution d'emploi dans l'eau, la sédimentation rapide qui en résulte entraînant un traitement biologique hétérogène.

Un inconvénient supplémentaire des poudres mouillables herbicides déjà connues réside dans le fait que certaines matières actives peuvent s'avérer difficiles à broyer, soit parce qu'elles sont trop dures, soit parce que, bien que solides, elles présentent un comportement plastique, soit encore parce qu'elles présentent un ramollissement lors du broyage, ou ont un point de fusion suffisamment bas pour pouvoir être atteint lors du broyage.

Enfin, les poudres mouillables déjà connues obtenues par broyage à sec de leurs différents constituants peuvent présenter une certaine toxicité cutanée pour le façonnier et l'utilisateur, du fait que la ou les matières actives finement divisées entrant dans leur constitution peuvent venir au contact direct de la peau.

On connaît également des poudres mouillables dans lesquelles les substances actives ne sont pas des herbicides.

A cet égard, le document FR 1 573 875 décrit des poudres mouillables dans la préparation desquelles les matières actives solides, qui sont des pesticides tels que le thiophosphate de paranitrophényle et de diéthyle ou de diméthyle, des fongicides tels que les dérivés des chloro- ou nitrophénols et des régulateurs de croissance tels que les esters lourds des phytohormones, sont fluidifiées au moyen de certains solvants lourds.

De même, le document GB 995 383 décrit des poudres mouillables dans lesquelles la matière active est un miticide, à savoir le 1,1-bis(halophényl)-2,2,2-trichloro-éthanol, ces poudres mouillables étant préparées en fluidifiant le miticide avec un solvant du type alkyloléate, et en l'appliquant sur une charge inerte.

L'invention a pour but, surtout, de remédier aux inconvénients des poudres mouillables de l'art antérieur, inconvénients essentiellement dus, comme on vient de le voir, à leur toxicité et à la pollution survenant lors de leur fabrication.

Or, la Société Demanderesse a le mérite d'avoir trouvé que, de façon inattendue et surprenante, non seulement ce but était atteint dès lors que la matière active herbicide solide à la température ambiante et choisie dans le groupe comprenant:

- les esters de la famille des parahydroxybenzonitroles du groupe comprenant l'octanoate de bromoxynil, l'heptanoate de bromoxynil, le butyrate de bromoxynil, l'octanoate d'ioxynil, l'heptanoate d'ioxynil, le butyrate d'ioxynil,
- les triazines du groupe comprenant la simazine, l'atrazine et l'amétryne,
- les dinitroanilines du groupe comprenant la butraline, la pendiméthaline, la trifluraline, l'orizaline,
- les urées substituées du groupe comprenant le diuron, l'isoproturon, l'éthidimuron,
- les sulfonylurées du groupe comprenant notamment le chlorsulfuron,

est présente dans la poudre mouillable sous la forme d'une composition herbicide liquide obtenue par liquéfaction de ladite matière active au moyen de certains solvants minéraux et/ou organiques, dont certains constituent eux-mêmes des matières actives, et/ou au moyen d'agents tensio-actifs et/ou par mélange avec une autre matière active propre à former avec elle une phase liquide, notamment un eutectique, mais que de plus, la poudre mouillable ainsi obtenue présente une activité biologique améliorée par rapport à celle que présentent les poudres mouillables herbicides selon l'art antérieur.

Cette amélioration de l'activité biologique réside non seulement, en une meilleure sélectivité et/ou une meilleure efficacité des poudres mouillables selon l'invention, mais également dans l'élargissement des possibilités d'utilisation desdites poudres, au niveau notamment de leur date d'utilisation, du stade végétatif des plantes à traiter et des diverses conditions climatiques.

Par conséquent la poudre mouillable herbicide conforme à l'invention qui comprend au moins une matière active herbicide solide à la température ambiante et au moins une charge inerte pulvérulente, est caractérisée par le fait que les particules constitutives de la charge servent de support à la matière active comprise dans une composition liquide, ladite matière active étant choisie dans le groupe comprenant :

- les esters de la famille des parahydroxybenzo-nitriles du groupe comprenant l'octanoate de bromoxynil, l'heptanoate de bromoxynil, le butyrate de bromoxynil, l'octanoate d'ioxynil, l'heptanoate d'ioxynil, le butyrate d'ioxynil,
- les triazines du groupe comprenant la simazine, l'atrazine et l'amétryne,
- les dinitroanilines du groupe comprenant la butraline, la pendiméthaline, la trifluraline, l'orizaline,
- les urées substituées du groupe comprenant le diuron, l'isoproturon, l'éthidimuron,
- les sulforylurées du groupe comprenant notamment le chlorsulfuron.

La susdite composition liquide est formée en liquéfiant la matière active herbicide :

a) au moyen d'un solvant choisi dans le groupe comprenant les huiles minérales aliphatiques, aromatiques, cycloaliphatiques, les solvants d'origine pétrolière du type alkylaromatique, les huiles végétales, le diméthylformamide, le diméthylsulfoxide, le diméthylacétamide, la N-méthylpyrrolidone, la diméthylimidazolinone, l'hexaméthylène-phosphotriamide, la cyclohexanone, l'acétophénone, le diacétone alcool, le butylbenzylphtalate, les dialkylphtalates, les alcools courts en $C_1$ à $C_8$ et leurs dérivés oxyéthylénés et/ou oxypropylénés, l'éthylèneglycol, le propylèneglycol, et les solvants à base d'alkylbenzène et d'alkylnaphtalène, dans lesquels la chaîne alkyle comprend de 1 à 8 atomes de carbones, et/ou

b) au moyen d'une matière active liquide choisie dans le groupe comprenant d'une part les phénoxyacides notamment l'acide 4- et l'acide 3-chlorophénoxyacétique, le 2,4-D, le MCPA, le mecoprop et le dichlorprop ainsi que leurs isomères dextrogyres, sous forme d'esters du groupe comprenant ceux du butylglycol, du 2-éthylhexanol, de l'isooctanol et des alcools en $C_8$, d'autre part le fluazifop-P-butyl, le metolachlore, le pretilachlore, le sethoxydime, le tebutame, et/ou

c) au moyen d'un agent tensio-actif choisi dans le groupe comprenant :

- les tensio-actifs non-ioniques obtenus par réaction de l'oxyde d'éthylène et/ou de l'oxyde de propylène sur des alcools gras, des alkylphénols, des tristyrylphénols, des amides gras, des amines grasses,
- les tensio-actifs anioniques qui sont les dérivés sulfonés, sulfatés ou phosphorés des susdits tensio-actifs non ioniques, éventuellement neutralisés par des amines aliphatiques, des alcanolamines ou l'hydroxyde de sodium ou de potassium,
- le dodécylbenzènesulfonate de calcium, les alkylbenzènesulfonates de calcium avec une chaine alkyle en $C_{12}$ à $C_{18}$, les alkylnaphtalènesulfonates de sodium ou de calcium, les lignosulfonates de sodium, de calcium, d'ammonium, les condensats formol/crésol/bétanaphtolsulfonate et/ou

d) par mélange avec une matière active solide propre à former avec elle un eutectique, ce qui conduit aux combinaisons du groupe comprenant :

- celle de l'octanoate de bromoxynil et du butyrate de bromoxynil à raison respectivement de 60 % et 40 % en poids, le point de fusion étant de 25° C,
- celle de l'heptanoate de bromoxynil et du butyrate de bromoxynil à raison respectivement de 70 % et 30 % en poids, le point de fusion étant de 26° C,
- celle de l'octanoate de bromoxynil et de l'heptanoate de bromoxynil à raison respectivement de 50 % et 50 % en poids, le point de fusion étant de 26° C.

Les susdits solvants à base d'alkylbenzène et d'alkylnaphtalène peuvent être ceux des marques Shell Sol R®, Solvesso 200® et Naphta® commercialisés respectivement par les Sociétés SHELL, ESSO ou EXXON et TOTAL.

Dans la susdite composition liquide, le solvant et/ou la matière active liquide choisie pour la liquéfaction sont présents à raison d'au plus 50 % en poids et de préférence d'au plus 25 % en poids, l'agent tensio-actif étant présent à raison d'au plus 20 % en poids et de préférence à raison de 5 à 10 % en poids par rapport au poids total de la composition liquide.

Le procédé de préparation de la poudre mouillable herbicide conforme à l'invention est caractérisé par le fait que l'on forme une composition liquide par liquéfaction d'au moins l'une des matières actives herbicides solides du groupe susdit, au moyen d'un solvant et/ou au moyen d'une matière active liquide et/ou au moyen d'un tensio-actif et/ou par formation d'un eutectique avec une autre matière active solide du groupe défini ci-dessus, et que l'on applique cette composition liquide sur des particules constitutives d'une charge pulvérulente inerte.

Un avantage particulier du procédé selon l'invention réside dans le fait que la ou les matières actives se répartissent de façon homogène dans ladite poudre, ce qui est particulièrement avantageux lorsque dans le cas de la présence de plusieurs matières actives, l'une d'elles est présente en une quantité très inférieure à celle des autres.

Toutes les combinaisons possibles des matières actives retenues conformément à l'invention peuvent être envisagées pour constituer les poudres mouillables selon l'invention.

Celles-ci comprennent de 1 à 50 % en poids et de préférence de 10 à 25 % en poids d'au moins une des susdites matières actives herbicides.

La charge inerte pulvérulente servant de support à la matière active herbicide comprise dans la susdite composition liquide peut être choisie dans le groupe comprenant les silices et les argiles.

Des exemples illustratifs de supports sont ceux connus sous les marques Tix-O-Sil 38$^®$ et Argirec B 22$^®$, commercialisés respectivement par les Sociétés RHONE POULENC et BLANC MINERAUX DE PARIS.

La poudre mouillable herbicide selon l'invention comprend de 30 à 95 % en poids d'au moins un support pulvérulent par rapport à son poids total.

Selon un mode de réalisation avantageux du procédé de préparation conforme à l'invention de la poudre mouillable herbicide, on verse la susdite composition liquide lentement sur la charge inerte pulvérulente constituant un support absorbant qui est mis sous agitation dans un mélangeur à poudre.

Les mélangeurs à poudre propres à être utilisés dans le procédé selon l'invention peuvent être constitués par des tambours horizontaux munis de palettes, par des mélangeurs à ruban, à ancre, à vis, à disques ou à socs, ou par tout autre appareil permettant le mélange de poudres.

A titre d'exemple, on peut citer les appareils connus sous les marques Myers$^®$, Vidax$^®$, Sevin$^®$, Lodige$^®$, Turbosphère$^®$.

Le débit de la composition liquide qui est coulée ou pulvérisée sur la charge inerte, la vitesse d'agitation de la charge, ainsi que les proportions respectives de composition liquide et de charge sont réglés de façon à obtenir une poudre mouillable homogène et s'écoulant librement.

L'homogénéité de la poudre mouillable peut être évaluée visuellement ou déterminée par sondage sur des échantillons.

Quand toute la composition liquide a été absorbée sur la charge inerte, la poudre mouillable ainsi obtenue contient peu ou pas d'agglomérats et les parois du dispositif de mélange sont propres.

On peut ajouter à cette poudre mouillable des agents mouillants, des agents dispersants et des tensio-actifs : par exemple on peut appliquer par pulvérisation un tensio-actif liquide jouant un rôle anti-poussière ou par saupoudrage un tensio-actif qui se trouve à l'état physique solide ; on peut également ajouter à cette poudre mouillable d'autres matières actives sous forme de poudre du groupe comprenant l'aminotriazole et les sels de sodium, de potassium et/ou de magnésium des phénoxyacides code le mécoprop, ces matières actives devant être solubles dans l'eau à la dose d'emploi de la poudre mouillable finale sur les végétaux : on peut également ajouter une poudre mouillable "classique", c'est-à-dire obtenue par broyage à sec de ses différents constituants.

Le mélange ainsi obtenu est agité jusqu'à obtention de l'homogénéité souhaitée.

Un avantage particulier du procédé de préparation conforme à l'invention de la poudre mouillable herbicide réside dans le fait qu'il ne nécessite aucun séchage, d'où une simplification et une réduction du prix de revient de la poudre mouillable.

Les exemples qui suivent permettront de mieux comprendre l'invention : ils ne sont pas limitatifs et sont donnés à titre illustratif en rapport avec des modes de réalisation avantageux.

Exemple 1

On prépare une poudre mouillable conforme à l'invention, à base d'octanoate de bromoxynil, la teneur de ladite poudre mouillable en cette matière active herbicide étant de 20 % en poids.

A l'intérieur d'une cuve de mélange chauffante, on dissout à la température ambiante 30,7 parties en poids d'octanoate de bromoxynil à 65,3 % de matière active dans un mélange de 2,5 parties en poids d'émulgateur de marque GALORYL EM 514$^®$, de 6 parties en poids d'émulgateur de marque GALORYL EM 60$^®$ et de 10,8 parties en poids d'un solvant d'origine pétrolière.

La solubilisation de l'octanoate de bromoxynil peut être favorisée par un léger chauffage à 40-50° C.

On obtient un liquide homogène.

La solution ainsi obtenue est appliquée, à l'intérieur d'un mélangeur qui peut être l'un de ceux commercialisés par la Société MYERS, sur 41 parties en poids d'une silice de marque Tix-O-Sil 38$^®$ : on ajoute à l'intérieur du même mélangeur 1 partie en poids d'un agent mouillant de marque GALORYL MT 41182 et 8 parties en poids d'un agent dispersant de marque GALORYL DT201$^®$.

Le mélange est homogénéisé.

On obtient une poudre beige de granulométrie inférieure à 250$\mu$m (norme AFNOR N° 25) dont la mouillabilité en eau dure (selon la norme OMS, introduction de 1 gramme de poudre dans 100 ml d'eau) est de 30 à 40 secondes au maximum et dont la suspensivité (type FISHER, eau dure OMS, introduction de 10 grammes de poudre dans 1 litre d'eau, 15 retournements puis repos de 30 minutes) est de 80 % minimum.

Cette poudre présente la composition centésimale suivante :

| | |
|---|---|
| Octanoate de bromoxynil (à 65,3 % de m.a.) | 30,7 |
| Emulgateur de marque GALORYL EM 514® | 2,5 |
| Emulgateur de marque GALORYL EM 60® | 6,0 |
| Solvant d'origine pétrolière | 10,8 |
| Tix-O-Sil 38® | 41,0 |
| Agent mouillant (GALORYL MT 41182) | 1,0 |
| Galoryl DT 201® | 8,0 |
| | 100,0 |

Exemple 2

On prépare une poudre mouillable conforme à l'invention à base de 10 % en poids de bromoxynil sous forme d'octanoate et de 10 % en poids de bromoxynil sous forme d'heptanoate.

A l'intérieur d'une cuve de mélange chauffante, on dissout à la température ambiante 15,4 parties en poids d'octanoate de bromoxynil à 65,3 % de matière active, et 14,9 parties en poids d'heptanoate de bromoxynil à 67,4 % de matière active dans un mélange de 3,1 parties en poids d'émulgateur de marque GALORYL EM 514®, de 5,7 parties en poids d'émulgateur de marque GALORYL EM 60®, et de 10,9 parties en poids d'un solvant d'origine pétrolière.

La solubilisation de l'octanoate de bromoxynil et de l'heptanoate de bromoxynil peut être favorisée par un léger chauffage à 40-50° C.

On obtient un liquide limpide homogène.

La solution ainsi obtenue est appliquée, à l'intérieur d'un mélangeur qui peut être l'un de ceux commercialisés par la Société MYERS, sur 41 parties en poids d'une silice de marque Tix-O-Sil 38® ; on ajoute à l'intérieur du même mélangeur 1 partie en poids d'agent mouillant de marque GALORYL MT 41182 et 8 parties en poids d'un agent dispersant de marque Galoryl DT201®.

Le mélange est homogénéisé.

On obtient une poudre beige de granulométrie inférieure à 250$\mu$m (norme AFNOR N° 25) dont la mouillabilité en eau dure (selon la norme OMS, introduction de 1 gramme de poudre dans 100 ml d'eau) est de 30 à 40 secondes au maximum, et dont la suspensivité (type FISHER, eau dure OMS, introduction de 10 grammes de poudre dans 1 litre d'eau, 15 retournements, puis repos de 30 minutes) est de 80 % minimum.

La poudre ainsi obtenue présente la composition centésimale suivante :

| | |
|---|---|
| Octanoate de bromoxynil (à 65,3 % de m.a.) | 15,4 |
| Heptanoate de bromoxynil (à 67,4 % de m.a.) | 14,9 |
| Emulgateur de marque GALORYL EM 514® | 3,1 |
| Emulgateur de marque GALORYL EM 60® | 5,7 |
| Solvant d'origine pétrolière | 10,9 |
| Tix-O-Sil 38® | 41,0 |
| Agent mouillant (GALORYL MT 41182) | 1,0 |
| Galoryl DT 201® | 8,0 |
| | 100,0 |

Exemple 3

Cet exemple, en tant qu'exemple comparatif destiné A faire ressortir la supériorité des poudres mouillables conformes à l'invention par rapport à celles de l'art antérieur, consiste à comparer dans des essais en serres, illustrés par le Tableau I indiqué plus loin :

- d'une part la poudre mouillable conforme à l'invention décrite à l'exemple 1 et
- d'autre part une poudre mouillable selon l'art antérieur, appelée poudre A, dont la composition est indiquée ci-après et qui se distingue de la poudre conforme à l'invention par le fait qu'elle ne comporte pas de composition intermédiaire liquide obtenue à l'aide d'un solvant, le solvant ayant été remplacé par une quantité équivalente de silice.

La matière active herbicide de la poudre A de l'art antérieur est constituée par de l'octanoate de bromoxynil dont la teneur en matière active est de 65,3 % en poids.

Hormis le fait que l'apport de matière active sur la charge inerte pulvérulente n'a pu avoir lieu dans le cas de la poudre A qu'en portant la matière active, la charge inerte et l'installation à la température de 40-50° C, les conditions de préparation de cette poudre A sont les mêmes que celles décrites pour la préparation de la poudre mouillable conforme à l'invention de l'exemple 1.

La poudre A ainsi obtenue présente la composition centésimale suivante :

| | |
|---|---:|
| - Octanoate de bromoxynil (à 65,3 % de m.a.) | 30,70 |
| - Emulgateur de marque GALORYL EM 514® | 2,50 |
| - Emulgateur de marque GALORYL EM 60® | 6,00 |
| - Solvant d'origine pétrolière | 0,00 |
| - Tix-O-Sil 38® | 51,80 |
| - Galoryl MT 41182 | 1,00 |
| - Galoryl DT 201 | 8,00 |
| | 100,00 |

Pour ces deux poudres mouillables, on a déterminé les pourcentages de destruction des plantes nuisibles apparaissant dans la première colonne du Tableau I 21 jours après l'application en ayant recours dans trois essais successifs, respectivement à 3 doses de matière active par hectare, à savoir une dose de 50 grammes/hectare, une de 100 grammes/hectare et une de 200 grammes par hectare.

TABLEAU I

| | Poudre mouillable conforme à l'invention (exemple 1) | | | Poudre mouillable de l'art antérieur (poudre A) | | |
|---|---|---|---|---|---|---|
| | Doses en m.a* (g/ha) | | | | | |
| | 50 | 100 | 200 | 50 | 100 | 200 |
| Plantes nuisibles traitées | Destruction (en %) | | | | | |
| Ambrosia | 45 | 55 | 95 | 5 | 15 | 50 |
| Chenopodium | 0 | 3 | 95 | 3 | 5 | 13 |
| Daucus | 0 | 0 | 3 | 0 | 0 | 0 |
| Galium | 15 | 35 | 85 | 5 | 25 | 45 |
| Matricaria | 18 | 83 | 100 | 0 | 10 | 70 |
| Rumex | 0 | 10 | 15 | 3 | 8 | 20 |
| Solanum | 95 | 100 | 100 | 55 | 88 | 98 |
| Stellaria | 5 | 5 | 5 | 3 | 3 | 5 |
| Taraxacum | 8 | 45 | 80 | 5 | 5 | 10 |
| Veronica | 30 | 100 | 100 | 10 | 95 | 98 |
| Moyenne | 22 | 44 | 68 | 9 | 25 | 41 |

*m.a. = matière active

Les résultats de ces essais réunis dans le Tableau I montrent qu'à la dose de 50 grammes/hectare, on obtient un pourcentage moyen de destruction de 22 % dans le cas de la poudre mouillable selon l'invention contre un pourcentage moyen de destruction de 9 % dans le cas de la poudre mouillable (A) selon l'art antérieur, qu'à la dose de 100 grammes/hectare, on obtient respectivement 44 % contre 25 % de destruction et qu'à la dose de 200 grammes/hectare, on obtient respectivement 68 % contre 41 % de destruction.

Exemple 4

On prépare une poudre mouillable conforme à l'invention à base de 6 % en poids d'ioxynil sous forme d'octanoate, de 6 % en poids d'ioxynil sous forme d'heptanoate et de 18 % en poids de mecoprop (MCPP) dextrogyre sous forme d'ester de butylglycol (BG).

A l'intérieur d'une cuve de mélange chauffante, on dissout à la température ambiante 8,45 parties en poids d'octanoate d'ioxynil à 71,1 % de matière active, 8,20 parties en poids d'heptanoate d'ioxynil à 73,3 % de matière active dans un mélange comprenant 27,70 parties en poids de MCPP Dextrogyre ester BG à 67,4 % de matière active, 2,25 parties en poids d'émulgateur de marque GALORYL EM 514®, 2,75 parties en poids d'émulgateur de marque GALORYL EM 60®, et 0,65 parties en poids d'un solvant d'origine pétrolière.

La solubilisation des matières actives peut être favorisée par un léger chauffage à 40-50° C.

On obtient un liquide limpide homogène.

La solution ainsi obtenue est appliquée, à l'intérieur d'un mélangeur qui peut être l'un de ceux commercialisés par la Société MYERS, sur 41 parties en poids d'une silice de marque Tix-O-Sil 38® ; on ajoute, à l'intérieur du même mélangeur, 1 partie en poids d'un agent mouillant de dénomination MT 41182 et 8 parties en poids d'un agent dispersant de marque Galoryl DT201®.

Le mélange est homogénéisé à l'intérieur du mélangeur.

On obtient une poudre beige de granulométrie inférieure à 250$\mu$m (norme AFNOR N° 25) dont la mouillabilité en eau dure (selon la norme OMS, introduction de 1 gramme de poudre dans 100 ml d'eau) est de 30 à 40 secondes au maximum, et dont la suspensivité (type FISHER, eau dure OMS, introduction de 10 grammes de poudre dans 1 litre d'eau, 15 retournements, puis repos de 30 minutes) est de 65 % minimum.

La poudre ainsi obtenue présente la composition centésimale suivante :

| | |
|---|---|
| Octanoate d'ioxynil (à 71,1 % de m.a.) | 8,45 |
| Heptanoate d'ioxynil (à 73,3 % de m.a.) | 8,20 |
| MCPP Dextrogyre Ester BG(à 67,4 % de m.a.) | 27,70 |
| Emulgateur de marque GALORYL EM 514® | 2,25 |
| Emulgateur de marque GALORYL EM 60® | 2,75 |
| Solvant d'origine pétrolière | 0,65 |
| Tix-O-Sil 38® | 41,00 |
| Agent mouillant (GALORYL MT 41182) | 1,00 |
| Galoryl DT 201® | 8,00 |
| | 100,00 |

Exemple 5

On prépare une poudre mouillable conforme à l'invention à base de 25 % en poids de butraline.

A l'intérieur d'une cuve de mélange chauffante, on dissout à température ambiante 25,65 parties en poids de butraline d'une pureté de 97,5 % dans un mélange comprenant 5 parties en poids d'un tensio-actif de marque GALORYL EM 458®, 5 parties en poids d'un tensio-actif de marque GALORYL MT 41® et 14,35 parties en poids d'un solvant d'origine pétrolière.

La solubilisation de la butraline peut être favorisée par un léger chauffage à 45-50° C.

On obtient un liquide limpide homogène.

La solution ainsi obtenue est appliquée à l'intérieur d'un mélangeur, qui peut être l'un de ceux commercialisés par la Société MYERS, sur 41 parties en poids d'une silice de marque Tix-O-Sil 38® : on ajoute à l'intérieur du même mélangeur, 1 partie en poids d'un agent mouillant de marque GALORYL MT 41182 et 8 parties en poids d'un agent dispersant de marque Galoryl DT201®.

Le mélange est homogénéisé à l'intérieur du mélangeur.

On obtient une poudre jaune de granulométrie inférieure à 200μm dont la mouillabilité en eau dure (selon la norme OMS, introduction de 1 gramme de poudre dans 100 ml d'eau) est de 1 minute au maximum.

La poudre ainsi obtenue présente la composition centésimale suivante :

| | |
|---|---|
| Butraline Technique (pureté = 97,5 %) | 25,65 |
| Galoryl EM 458® | 5,00 |
| Galoryl MT41® | 5,00 |
| Solvant d'origine pétrolière | 14,35 |
| Tix-O-Sil 38® | 41,00 |
| Agent mouillant (GALORYL MT 41182) | 1,00 |
| Galoryl DT 201® | 8,00 |
| | 100,00 |

Exemple 6

On prépare une poudre mouillable conforme à l'invention à base de 13 % en poids de bromoxynil sous forme d'octanoate et de 26 % en poids de mecoprop dextrogyre sous forme de sel de magnésium.

La préparation de cette poudre mouillable selon l'invention consiste en un mélange de deux poudres mouillables préparées indépendamment l'une de l'autre.

L'une de ces deux poudres mouillables est celle de l'exemple 1, l'autre poudre mouillable, appelée poudre B, est à base de 75 % en poids de mecoprop dextrogyre sous forme de sel de magnésium.

La poudre B est préparée par mélange, dans un mélangeur à poudre de marque Lodige, de 93,75 parties en poids de mecoprop dextrogyre sous forme de sel de magnésium ayant une teneur en matière active de 80 %, de 1 partie en poids d'un agent dispersant de marque Galoryl MT 41182®, de 2 parties en poids d'un agent dispersant de marque GALORYL DT 201® et de 3,25 parties en poids d'une silice de marque Tix-O-Sil 38®.

La poudre B ainsi obtenue présente la composition centésimale suivante :

| Mecoprop dextrogyre sous forme de sel de magnésium | 93,75 |
| Galoryl MT 41182® | 1,00 |
| Galoryl DT 201® | 2,00 |
| Tix-O-Sil 38® | 3,25 |
| | 100,00 |

La poudre mouillable A base d'octanoate de bromoxynil et de mecoprop dextrogyre sous forme de sel de magnésium est obtenue par mélange de 65 parties en poids de la poudre mouillable selon l'exemple 1, de 34,6 parties en poids de la poudre B et de 0,4 parties en poids d'une silice de marque Tix-O-Sil 38® ; elle présente la composition centésimale suivante :

| Poudre mouillable selon l'exemple 1 | 65,0 % |
| Poudre B | 34,6 % |
| Tix-O-Sil 38® | 0,4 % |
| | 100,0 % |

Exemple 7

Des essais comparatifs en plein champ ont été réalisés.

Pour vérifier l'activité biologique des poudres mouillables herbicides conformes à l'invention, on a comparé les produits suivants :

- une suspension concentrée aqueuse de bromoxynil phénol contenant 250 grammes/litre de matière active (I),
- un concentré émulsionnable d'octanoate de bromoxynil contenant 240 grammes/litre de matière active (II),
- la poudre mouillable selon l'exemple 1 contenant de l'octanoate de bromoxynil à raison de 20 % de matière active (III),
- la poudre mouillable selon l'exemple 2 contenant de l'octanoate et de l'heptanoate de bromoxynil respectivement chacun à raison de 10 % en poids soit 20 % de matière active au total (IV),
- une poudre mouillable réalisée selon l'art antérieur contenant de l'octanoate de bromoxynil à la teneur de 20 % de matière active (V).

Les produits I et II sont des produits commerciaux de l'art antérieur dont les activités biologiques sont bien connues tant vis-à-vis du mais sur le plan de la phytotoxicité, que sur le plan de l'efficacité herbicide vis-à-vis de plantes adventices courantes en cultures de maïs et difficiles à détruire telles que Chenopodes et Amarantes.

On a déterminé pour les produits I à V l'efficacité herbicide vis-à-vis des mêmes Chenopodes et Amarantes ainsi que la sélectivité à l'égard du maïs.

Les doses utiles et nécessaires auxquelles les produits doivent être appliqués sont déterminées en fonction d'un niveau d'efficacité au moins égal à 80 % de destruction et si possible à des niveaux voisins de 90 %, en fonction de la sélectivité.

Elles sont indiquées ci-après :

- pour le produit I, la dose moyenne d'application est de 600 grammes de matière active/hectare, dans une fourchette d'utilisation pratique de 450 à 750 grammes de matière active/hectare,
- pour le produit II, la dose utile moyenne d'application est de 350 grammes de matière active/hectare pour avoisiner des niveaux d'efficacité acceptables,
- pour les produits III et IV, la dose utile moyenne d'application est de 450 grammes de matière active/hectare pour avoisiner des niveaux d'efficacité acceptables,
- pour le produit V, la dose utile moyenne d'application est de 600 grammes de matière active/hectare.

Chaque traitement est appliqué sur deux parcelles expérimentales élémentaires A et B dans trois champs différents. Chaque parcelle comprend 3 lignes de maïs d'une surface de 2,40 mètres x par 10 mètres = 24 m$^2$.

L'application est faite lorsque le maïs est au stade 4 à 6 feuilles et les plantes nuisibles entre les stades 2 feuilles cotylédonaires et 4 à 6 feuilles vraies.

L'application des différents produits est faite par pulvérisation classique à raison de 250 litres de bouillie à l'hectare. Chaque produit (I à V) a été appliqué à 2 doses de matière active/hectare ; la dose soulignée dans le Tableau II ci-après, est la dose d'utilisation préconisée.

Quinze jours après le traitement, on a observé :

- d'une part la phytotoxicité sur maïs, celle-ci s'appréciant en pourcentage moyen de surface de feuille nécrosée,
- d'autre part l'efficacité, celle-ci s'appréciant en pourcentage des plantes adventices détruites.

Les résultats de ces observations sont réunis dans le Tableau II.

De l'ensemble de ces résultats on peut conclure que les poudres mouillables conformes à l'invention, tout en ayant un effet général nettement meilleur que la suspension concentrée et que le concentré émulsionnable, sont à peine plus phytotoxiques que la poudre mouillable classique et sont significativement plus efficaces que celle-ci avec une teneur en matière active à l'hectare nettement inférieure.

TABLEAU II

| | I | | II | | III | | IV | | V | |
|---|---|---|---|---|---|---|---|---|---|---|
| | Suspension concentrée de bromoxynil phénol | | Concentré émulsionnable d'octanoate de bromoxynil | | Poudre mouillable selon l'invention d'octanoate de bromoxynil (exemple 1) | | Poudre mouillable selon l'invention d'octanoate/heptanoate de bromoxynil (exemple 2) | | Poudre mouillable classique d'octanoate de bromoxynil | |
| Teneur en matière active (m.a.) | 250 g/l | | 240 g/l | | 20 % | | 20 % | | 20 % | |
| dose/ha en g de m.a. | 450 | 600 | 225 | 350 | 350 | 450 | 350 | 450 | 450 | 600 |
| **Sélectivité** | A  B | A  B | A  B | A  B | A  B | A  B | A  B | A  B | A  B | A  B |
| Champs 1 | 0  0 | 0  0 | 5  0 | 30  30 | 2,5 0 | 0  0 | 0  0 | 0  0 | 0  0 | 0  0 |
| Champs 2 | 5  15 | 15  5 | 5  5 | 5  30 | 2,5 0 | 2,5 5 | 2,5 0 | 5  5 | 0  0 | 0  0 |
| Champs 3 | 5  5 | 5  15 | 15  5 | 15  30 | 2,5 2,5 | 5  2,5 | 2,5 0 | 2,5 0 | 0  0 | 0  0 |
| Moyenne | 5 | 8,3 | 5,8 | 23,3 | 2,5 | 2,5 | 0,8 | 2 | 0 | 0 |
| **Efficacité** | | | | | | | | | | |
| Amarante[*] | 65 | 85 | 78 | 83 | 94 | 94 | 93 | 95 | 86 | 90,8 |
| Chénopode[*] | 61 | 89 | 87 | 80 | 90 | 96 | 82 | 94 | 80 | 80 |

[*] Plantes à détruire.

EP 0 522 906 B1

Exemple 8

On a étudié la phytotoxicité sur maïs des produits testés à l'exemple 7 à l'exception du produit IV de l'exemple 7 qui est remplacé par un produit IV-A constitué par un sel de diéthanolamine du bromoxynil en solution aqueuse.

On a appliqué les différents produits à raison de deux doses sur deux parcelles différentes C et D.

On a examiné la phytotoxicité comme indiqué à l'exemple 7 et ce à deux moments, à savoir au temps T = 10 jours et au temps T = 15 jours.

Les pourcentages moyens de surface de feuille nécrosée ainsi que l'ensemble des données sont réunis dans le tableau III.

TABLEAU III

| | I Suspension concentrée de bromoxynil phénol | | | | II Concentré émulsionnable d'octanoate de bromoxynil | | | | III Poudre mouillable selon l'invention d'octanoate de bromoxynil (exemple 1) | | | | IV-A Solution aqueuse de sel de bromoxynil | | | | V Poudre mouillable classique d'octanoate de bromoxynil | | | |
|---|---|---|---|---|---|---|---|---|---|---|---|---|---|---|---|---|---|---|---|---|
| Teneur en matière active (m.a.) | 250 g/l | | | | 240 g/l | | | | 20 % | | | | 360 g/l | | | | 20 % | | | |
| dose/ha en g de m.a. | 1200 | | 600 | | 450 | | 225 | | 900 | | 450 | | 1200 | | 600 | | 1800 | | 900 | |
| Résultats % (phytotoxicité) | C | D | C | D | C | D | C | D | C | D | C | D | C | D | C | D | C | D | C | D |
| T = 10 j | 10 | 8 | 5 | 4 | 24 | 28 | 11 | 15 | 3 | 6 | 1 | 2 | 10 | 8 | 7 | 5 | 6 | 3 | 2 | 2 |
| T = 15 j | 10 | 11 | 5 | 9 | 24 | 38 | 11 | 18 | 4 | 9 | 1 | 5 | 10 | 10 | 7 | 8 | 10 | 9 | 2 | 6 |

A l'examen du tableau III, il apparaît qu'à efficacité égale, la poudre mouillable selon l'invention fait preuve d'une phytotoxicité sur maïs meilleure ou comparable à celle d'une poudre mouillable classique, pour une dose en matière active deux fois plus faible à l'hectare, ce qui constitue un progrès aussi bien sur le plan économique que sur le plan de la protection de l'environnement du fait d'une meilleure utilisation du principe actif. Par ailleurs, la poudre mouillable selon l'invention apporte une plus grande sécurité pour le maïs en cas de surdosage par rapport aux présentations existantes du type concentré émulsionnable, solution aqueuse, ou suspension concentrée.

Exemple 9

A partir d'une triazine, à savoir l'amétryne, on a préparé une poudre mouillable conforme à l'invention et une poudre mouillable classique.

a) Préparation de la poudre mouillable conforme à l'invention.
On mélange :

- 21,35 parties pondérales d'un solvant d'origine pétrolière, SHELL SOL R®,
- 2,60 parties pondérales de N-méthyl-pyrrolidone à titre de solvant,
- 3,15 parties pondérales de NANSA EVM 70 i ® à titre de tensio-actif,
- 2,60 parties pondérales d'émulgateur GALORYL EM 33®,

puis on ajoute :

- 10,30 parties pondérales d'amétryne technique (pureté 98 %) et on chauffe à 40-50°C pour solubilisation complète.
On absorbe le mélange sur :
- 51 parties pondérales d'un support TIX-O-SIL 38®, on homogénéise et on ajoute :
- 1 partie pondérale d'un agent mouillant GALORYL MT 41182®,
- 8 parties pondérales d'un agent dispersant GALORYL DT 201®.

On émotte par passage sur un broyeur muni d'une grille de 1-2 mm.
On obtient une poudre beige de granulométrie inférieure à 200 $\mu$m dont la mouillabilité en eau dure OMS, introduction de 1 g de poudre dans 100 ml d'eau, est de 30 secondes au maximum.
b) Préparation de la poudre mouillable classique.
On mélange intimement les constituants suivants :

| | |
|---|---|
| a) Amétryne Technique (pureté 98 %) | 81,6 |
| b) Argirec B 22® à titre d'argile | 8,4 |
| c) GALORYL MT 41182® à titre d'agent mouillant | 3,0 |
| c) GALORYL DT 201® à titre d'agent dispersant | 7,0 |
| | 100,0 |

On procède à un mélange intime sur broyeur muni d'une grille de 0,5 mm.
On obtient une poudre beige de granulométrie inférieure à 100 $\mu$m dont la mouillabilité en eau dure OMS, introduction de 1 g de poudre dans 100 ml d'eau, est de 1 minute au maximum.
c) Etude comparative en pré-levée.
Les deux poudres ont été appliquées à raison de 1000, 2000 et 3000 g/ha de matière active par pulvérisation d'une bouillie à raison de 500 l/ha, sur des terrines de 10 X 20 cm dans lesquelles étaient semées des espèces adventices dicotylédones.
Les résultats réunis dans le tableau IV ont été recencés 28 jours après le semis et le traitement ; ils sont exprimés en pourcentages de destruction par rapport à des plantes non traitées prises comme témoin :

TABLEAU IV

| Poudre mouillable | selon l'invention | | | classique | | |
|---|---|---|---|---|---|---|
| Doses amétryne (g/ha) | 1000 | 2000 | 3000 | 1000 | 2000 | 3000 |
| % de destruction sur Solanum nigrum | 60 | 73 | 85 | 50 | 50 | 55 |

La poudre mouillable selon l'invention montre donc une très nette supériorité, même en pré-levée, par rapport à la poudre mouillable classique.

d) Les deux poudres ont été appliquées à raison de 1000, 2000 et 3000 g/ha de matière active par pulvérisation d'une bouillie à raison de 500 l/ha, sur des terrines de 10 X 20 cm dans lesquelles étaient semées, 15 à 20 jours auparavant, des espèces adventices graminées diverses.

Les résultats réunis dans le tableau V ont été recensés 10 jours après le traitement : ils sont exprimés en pourcentages de destruction par rapport à des plantes non traitées prises comme témoin :

TABLEAU V

| Poudre mouillable | selon l'invention | | | classique | | |
|---|---|---|---|---|---|---|
| Doses amétryne (g/ha) | 1000 | 2000 | 3000 | 1000 | 2000 | 3000 |
| % de destruction sur Digitaria | 20 | 35 | 45 | 10 | 10 | 20 |
| Echinochloa | 20 | 25 | 35 | 5 | 8 | 10 |
| Setaria | 70 | 90 | 100 | 35 | 50 | 80 |

La poudre mouillable selon l'invention montre une très nette supériorité par rapport à une poudre mouillable classique.

Exemple 10

On a procédé à une étude comparative des propriétés "biologiques" de la poudre mouillable conforme à l'invention décrite à l'exemple 5 (Poudre K) avec

- celles d'une poudre mouillable classique (Produit L) préparée comme indiqué ci-après et
- celles d'une poudre mouillable (Produit M) identique à la poudre K, à la différence près que le solvant d'origine pétrolière est remplacé par de la silice, cette poudre M étant préparée comme indiqué ci-après.

a) Préparation de la poudre L.

On fait fondre 25,65 parties pondérales de butraline technique d'une pureté de 97,5% et on coule sur 65,35 parties pondérales d'un support constitué par de la silice de marque TIX-O-SIL 38® pour absorption complète.

On ajoute ensuite:

- 1 partie pondérale d'un agent mouillant de marque GALORYL MT 41182® et
- 8 parties pondérales d'un agent dispersant de marque GALORYL DT 201®.

On homogénéise et on émotte par passage sur broyeur à grille d'un diamètre de 1 mm.

On obtient une poudre jaune de granulométrie inférieure à 200μm dont la mouillabilité en eau dure OMS (introduction de 1 g de poudre dans 100 ml) est de 2 à 3 minutes.

b) Préparation de la poudre M.

On fait fondre 25,65 parties pondérales de butraline technique d'une pureté de 97,5% et on coule sur 55,35 parties pondérales d'un support constitué par de la silice de marque TIX-O-SIL 38® pour absorption complète.

On absorbe ensuite le mélange sur

- 5 parties pondérales d'un tensio-actif de marque GALORYL EM 458® et

- 5 parties pondérales d'un tensio-actif de marque GALORYL MT 41$^®$.

On homogénéise et on ajoute:

- 1 partie pondérale d'un agent mouillant de marque GALORYL MT 41182$^®$ et
- 8 parties pondérales d'un agent dispersant de marque GALORYL DT 201$^®$.

Le mélange est homogénéisé à l'intérieur du mélangeur.

On émotte par passage sur un broyeur à grille d'un diamètre de 1 mm.

On obtient une poudre jaune de granulométrie inférieure à 200μm dont la mouillabilité en eau dure OMS (introduction de 1 g de poudre dans 100 ml) est de 1 minute au maximum.

A l'aide des trois poudres, on procède à l'essai comparatif décrit ci-après.

Chacune des poudres K, L et M a été appliquée à raison de 1000 et 3000 g/ha de matière active (butraline) par pulvérisation d'une bouillie à raison de 500 l/ha sur des terrines de 10 x 20 cm dans lesquelles étaient semées des espèces adventices diverses graminées et dicotylédones.

Les résultats réunis dans le Tableau VI ont été recensés 21 jours après le semis et le traitement; ils sont exprimés en pourcentage de destruction par rapport à des plantes non traitées prises comme témoin.

TABLEAU VI

| Poudre mouillable | K | | L | | M | |
|---|---|---|---|---|---|---|
| Doses butraline (g/ha) | 1000 | 3000 | 1000 | 3000 | 1000 | 3000 |
| % de destruction sur Avena fatua | 75 | 95 | 30 | 55 | 20 | 75 |
| Lolium multiflorum | 98 | 100 | 65 | 88 | 70 | 85 |
| Festuca | 93 | 98 | 55 | 85 | 50 | 83 |
| Capsella bursa-pastoris | 10 | 75 | 0 | 40 | 0 | 40 |
| Stellaria media | 50 | 75 | 45 | 55 | 25 | 70 |

Ces résultats montrent bien la supériorité, même en pré-levée, de la poudre mouillable selon l'invention par rapport à des poudres obtenues selon des procédés classiques: cette supériorité se manifeste par une meilleure destruction des adventices, notamment des graminées, mais également des dicotylédones.

**Revendications**

1. Poudre mouillable herbicide comprenant au moins une matière active herbicide solide à température ambiante et au moins une charge inerte pulvérulente, caractérisée par le fait que les particules constitutives de la charge servent de support à la matière active comprise dans une composition liquide, ladite matière active étant choisie dans le groupe comprenant :

   - les esters herbicides de la famille des parahydroxybenzonitriles,
   - les triazines herbicides,
   - les dinitroanilines herbicides,
   - les urées substituées herbicides et
   - les sulfonylurées herbicides.

2. Poudre mouillable herbicide selon la revendication 1, caractérisée par le fait que la matière active est choisie dans le groupe comprenant:

   - les esters herbicides de la famille des parahydroxybenzonitriles du groupe constitué par l'octanoate de bromoxynil, l'heptanoate de bromoxynil, le butyrate de bromoxynil, l'octanoate d'ioxynil, l'heptanoate d'ioxynil, le butyrate d'ioxynil,
   - les triazines herbicides du groupe constitué par la simazine, l'atrazine et l'amétryne,
   - les dinitroanilines herbicides du groupe constitué par la butraline, la pendiméthaline, la trifluraline, l'orizaline,
   - les urées substituées herbicides du groupe constitué par le diuron, l'isoproturon, l'éthidimuron, et

- le chlorsulfuron.

3. Poudre mouillable herbicide selon l'une des revendications 1 ou 2, caractérisée par le fait que la composition liquide est formée en liquéfiant la matière active herbicide:

a) au moyen d'un solvant choisi dans le groupe comprenant les huiles minérales aliphatiques, aromatiques, cycloaliphatiques, les solvants d'origine pétrolière du type alkylaromatique, les huiles végétales, le diméthylformamide, le diméthylsulfoxide, le diméthylacétamide, la N-méthylpyrrolidone, la diméthylimidazolinone, l'hexaméthylène-phosphotriamide, la cyclohexanone, l'acétophénone, le diacétone alcool, le butylbenzylphtalate, les dialkylphtalates, les alcools courts en $C_1$ à $C_8$ et leurs dérivés oxyéthylénés et/ou oxypropylénés, l'éthylèneglycol, le propylèneglycol et les solvants à base d'alkylbenzène et d'alkylnaphtalène, dans lesquels la chaîne alkyle comprend de 1 à 8 atomes de carbone, et/ou
b) au moyen d'une matière active liquide choisie dans le groupe comprenant d'une part les phénoxyacides notamment l'acide 4- et l'acide 3-chlorophénoxyacetique, le 2,4-D, le MCPA, le mecoprop et le dichlorprop ainsi que leurs isomères dextrogyres, sous forme d'esters du groupe comprenant ceux du butylglycol, du 2-éthylhexanol, de l'isooctanol et des alcools en $C_8$, d'autre part le fluazifop-P-butyl, le metolachlore, le pretilachlore, le sethoxydime, le tebutame, et/ou
c) au moyen d'un agent tensioactif choisi dans le groupe comprenant:

- les tensioactifs non-ioniques obtenus par réaction de l'oxyde d'éthylène et/ou de l'oxyde de propylène sur des alcools gras, des alkylphénols, des tristyrylphénols, des amides gras,
- les tensioactifs anioniques qui sont les dérivés sulfonés, sulfatés ou phosphorés des susdits tensioactifs non ioniques, éventuellement neutralisés par des amines aliphatiques, des alcanolamines ou l'hydroxyde de sodium ou de potassium,
- le dodécylbenzènesulfonate de calcium, les alkylbenzènesulfonates de calcium ayant une chaîne alkyle en $C_{12}$ à $C_{18}$, les alkylnaphtalènesulfonates de sodium ou de calcium, les lignosulfonates de sodium, de calcium, d'ammonium, les condensats formol/crésol/bétanaphtolsulfonate et/ou

d) par mélange avec une matière active solide propre à former avec elle un eutectique, ce qui conduit aux combinaisons du groupe comprenant:

- celle de l'octanoate de bromoxynil et du butyrate de bromoxynil à raison respectivement de 60% et 40% en poids, le point de fusion étant de 25°C,
- celle de l'heptanoate de bromoxynil et du butyrate de bromoxynil à raison respectivement de 70% et 30% en poids, le point de fusion étant de 26°C,
- celle de l'octanoate de bromoxynil et de l'heptanoate de bromoxynil à raison respectivement de 50% et 50% en poids, le point de fusion étant de 26°C.

4. Poudre mouillable selon l'une des revendications 1 à 3, caractérisée par le fait que, dans la composition liquide, le solvant et/ou la matière active liquide choisie pour la liquéfaction de la matière active solide sont présents à raison d'au plus 50% en poids et, de préférence, d'au plus 25% en poids, l'agent tensioactif étant présent à raison d'au plus 20% en poids et, de préférence, à raison de 5 à 10% en poids par rapport au poids total de la composition liquide.

5. Poudre mouillable selon l'une des revendications 1 à 4, caractérisée par le fait qu'elle comprend de 1 à 50% en poids et, de préférence, de 10 à 25% en poids d'au moins une matière active herbicide.

6. Poudre mouillable selon l'une des revendications 1 à 5, caractérisée par le fait que la charge inerte est choisie dans le groupe comprenant les silices et les argiles, notamment celles connues sous les marques Tix-O-Sil 38® et Argirec B 22®.

7. Poudre mouillable selon l'une des revendications 1 à 6, caractérisée par le fait qu'elle comprend au moins une charge inerte pulvérulente à raison de 30 à 95% en poids par rapport au poids total de la poudre mouillable.

8. Procédé de préparation d'une poudre mouillable herbicide, caractérisé par le fait que l'on forme une composition liquide par liquéfaction d'au moins une matière active herbicide solide choisie dans le groupe comprenant:

- les esters herbicides de la famille des parahydroxybenzonitriles,

- les triazines herbicides,
- les dinitroanilines herbicides,
- les urées substituées herbicides et
- les sulfonylurées herbicides,

au moyen d'un solvant et/ou au moyen d'une matière active liquide et/ou au moyen d'un tensioactif et/ou par formation d'un eutectique avec une autre matière active solide, et que l'on applique cette composition liquide sur des particules constitutives d'une charge pulvérulente inerte.

9. Procédé de préparation d'une poudre mouillable herbicide selon la revendication 8, caractérisé par le fait que la matière active est choisie dans le groupe comprenant:

- les esters herbicides de la famille des parahydroxybenzonitriles du groupe constitué par l'octanoate de bromoxynil, l'heptanoate de bromoxynil, le butyrate de bromoxynil, l'octanoate d'ioxynil, l'heptanoate d'ioxynil, le butyrate d'ioxynil,
- les triazines herbicides du groupe constitué par la simazine, l'atrazine et l'amétryne,
- les dinitroanilines herbicides du groupe constitué par la butraline, la pendiméthaline, la trifluraline, l'orizaline,
- les urées substituées herbicides du groupe constitué par le diuron, l'isoproturon, l'éthidimuron, et
- le chlorsulfuron.

## Claims

1. Herbicidal wettable powder comprising at least one herbicidal active substance which is solid at ambient temperature and at least one pulverulent inert filler, characterized by the fact that the constitutive particles of the filler constitute a support or carrier for the active substance comprised within a liquid composition, said active substance being selected from the group comprising:

   - the herbicidal esters of the family of the parahydroxybenzonitriles,
   - the herbicidal triazines,
   - the herbicidal dinitroanilines,
   - the herbicidal substituted ureas,
   - the herbicidal sulphonylureas.

2. Herbicidal wettable powder according to claim 1, characterized by the fact that the active substance is selected from the group comprising:

   - the herbicidal esters of the family of the parahydroxybenzonitriles of the group consisting of bromoxynil octanoate, bromoxynil heptanoate, bromoxynil butyrate, ioxynil octanoate, ioxynil heptanoate, ioxynil butyrate,
   - the herbicidal triazines of the group consisting of simazine, atrazine and ametryne,
   - the herbicidal dinitroanilines of the group consisting of butraline, pendimethaline, trifluraline, orizaline,
   - the herbicidal substituted ureas of the group consisting of diuron, isoproturon, ethidimuron, and
   - chlorsulfuron.

3. Herbicidal wettable powder according to one of claims 1 or 2, characterized by the fact that the liquid composition is obtained by liquifying the herbicidal active substance:

   a) by means of a solvent selected from the group comprising the mineral aliphatic, aromatic, cycloaliphatic oils, the solvents of petroleum origin of the alkylaromatic type, the plant oils, dimethylformamide, dimethylsulphoxide, dimethylacetamide, N-methylpyrrolidone, dimethylimidazolinone, hexamethylenephosphotriamide, cyclohexanone, acetophenone, alcohol diacetone, butylbenzylphthalate, the dialkylphthalates, the short alcohols with a chain in $C_1$ to $C_8$ and their oxyethylenated and/or oxypropylenated derivatives, ethyleneglycol, propyleneglycol, and the solvents on the basis of alkylbenzene and alkylnaphthalene, in which the alkyl chain comprises from 1 to 8 carbon atoms, and/or
   b) by means of a liquid active substance selected from the group comprising, on the one hand, the phenoxyacids, especially 4- and 3-chlorophenoxyacetic acid, 2.4-D, MCPA, mecoprop and dichlorprop as well as their dextrogyre isomers, in the form of esters of the group comprising those of butylglycol, 2-ethylhexanol, isooctanol and of the alcohols in $C_8$, on the other hand fluazifop-p-butyl, metolachlor, pretilachlor, sethoxydime, tebutame, and/or

c) by means of a surfactive agent selected from the group comprising:

- non-ionic surfactive agents obtained by reaction of ethylene and/or propylene oxide on fatty alcohols, alkylphenols, tristyrylphenols, fatty amides,
- anionic surfactive agents which are the sulphonated, sulphated or phosphorulated derivatives of the above-mentioned non-ionic surfactive agents, possibly neutralized by aliphatic amines, alkanolamines or sodium or potassium hydroxide,
- calcium dodecylbenzenesulphonate, calcium alkylbenzenesulphonates having a alkyl chain in $C_{12}$ to $C_{18}$, sodium or calcium alkylnaphthalenesulphonates, sodium, calcium or ammonium lignosulphonates, formol/cresol/betanaphtholsulphonate condensates and/or

d) by mixture with a solid active substance adapted to form with it an eutectic, which provides the combinations of the group comprising:

- the combination of bromoxynil octanoate with bromoxynil butyrate, the proportions being respectively 60% and 40% by weight, the melting point being 25°C,
- the combination of bromoxynil heptanoate with bromoxynil butyrate, the proportions being respectively 70% and 30% by weight, the melting point being 26°C,
- the combination of bromoxynil octanoate with bromoxynil heptanoate, the proportions being respectively 50% and 50% by weight, the melting point being 26°C.

4. Wettable powder according to one of claims 1 to 3, characterized by the fact that, in the liquid composition, the solvent and/or the liquid active substance selected for liquifying the solid active substance are present in an amount of at most 50% by weight and preferably of at most 25% by weight, the surfactive agent being present in a proportion of at most 20% by weight and preferably in a proportion of 5 to 10% by weight with respect to the total weight of the liquid composition.

5. Wettable powder according to one of claims 1 to 4, characterized by the fact that it comprises from 1 to 50% by weight and preferably from 10 to 25% by weight of at least one herbicidal active substance.

6. Wettable powder according to one of claims 1 to 5, characterized by the fact that the inert filler is selected from the group comprising silica and clays, namely those known under the trademarks TIX-O-SIL 38® and ARGIREC B 22®.

7. Wettable powder according to one of claims 1 to 6, characterized by the fact that it comprises from 30 to 95% by weight of at least one pulverulent inert filler with respect to its total weight.

8. Process for the preparation of the herbicidal wettable powder, characterized by the fact that a liquid composition is prepared by liquifying at least one herbicidal active solid substance solid selected from the group comprising:

- the herbicidal esters of the family of the parahydroxybenzonitriles,
- the herbicidal triazines,
- the herbicidal dinitroanilines,
- the herbicidal substituted ureas,
- the herbicidal sulphonylureas,

by means of a solvent and/or by means of a liquid active substance and/or by means of a surfactive agent and/or by formation of an eutectic with another solid active substance, the said liquid composition being applied on the constitutive particles of an inert pulverulent filler.

9. Process for the preparation of the herbicidal wettable powder according to claim 8, characterized by the fact that the active substance is selected from the group comprising:

- the herbicidal esters of the family of the parahydroxybenzonitriles of the group consisting of bromoxynil octanoate, bromoxynil heptanoate, bromoxynil butyrate, ioxynil octanoate, ioxynil heptanoate, ioxynil butyrate,
- the herbicidal triazines of the group consisting of simazine, atrazine and ametryne,
- the herbicidal dinitroanilines of the group consisting of butraline, pendimethaline, trifluraline, orizaline,
- the herbicidal substituted ureas of the group consisting of diuron, isoproturon, ethidimuron, and

- chlorsulfuron.

**Patentansprüche**

1. Benetzbares herbizides Pulver, umfassend wenigstens eine bei Raumtemperatur feste herbizide wirksame Substanz und wenigstens einen inerten pulverförmigen Füllstoff, dadurch gekennzeichnet, daß die den Füllstoff bildenden Teilchen als Träger der in einer flüssigen Zusammensetzung enthaltenen wirksamen Substanz dienen, welche wirksame Substanz von der Gruppe ausgewählt ist, die:

   - die herbiziden Ester der Familie der Parahydroxybenzonitrile,
   - die herbiziden Triazine,
   - die herbiziden Dinitroaniline,
   - die herbiziden Sulfonylharnstoffe,

   umfaßt.

2. Benetzbares herbizides Pulver nach Anspruch 1, dadurch gekennzeichnet, daß die wirksame Substanz von der Gruppe ausgewählt ist, die:

   - die herbiziden Ester der Familie der Parahydroxybenzonitrile der Gruppe bestehend aus Bromoxyniloctanoat, Bromoxynilheptanoat, Bromoxynilbutyrat, Ioxyniloctanoat, Ioxynilheptanoat, Ioxynilbutyrat,
   - die herbiziden Triazine der Gruppe bestehend aus Simazin, Atrazin und Ametryn,
   - die herbiziden Dinitroaniline der Gruppe bestehend aus Butralin, Pendimethalin, Trifluralin, Orizalin,
   - die herbiziden substituieren Harnstoffe der Gruppe bestehend aus Diuron, Isoproturon, Ethidimuron und
   - Chlorsulfuron,

   umfaßt.

3. Benetzbares herbizides Pulver nach einem der Ansprüche 1 oder 2, dadurch gekennzeichnet, daß die flüssige Zusammensetzung gebildet wird durch Verflüssigen der herbiziden wirksamen Substanz:

   a) mit Hilfe eines Lösungsmittels, das aus der Gruppe ausgewählt ist, weiche aliphatische, aromatische, cycloaliphatische Mineralöle, die aus Erdöl stammenden Lösungsmittel vom Typ der Alkylaromaten, pflanzliche Öle, Dimethylformamid, Dimethylsulfoxid, Dimethylacetamid, N-Methylpyrrolidon, Dimethylimidazolinon, Hexamethylenphosphotriamid, Cyclohexanon, Acetophenon, Diacetonalkohol, Butylbenzyl-phthalat, Dialkylphthalate, die niedrigen Alkohole mit $C_1$ bis $C_8$ und deren Oxyethylen- und/oder Oxypropylen-derivate, Ethylenglykol, Propylenglykol und die Lösungsmittel auf Basis von Alkylbenzol und Alkylnaphthalin, mit einer Alkylkette von 1 bis 8 Kohlenstoffen, umfaßt und/oder
   b) mit Hilfe einer flüssigen wirksamen Substanz, welche von der Gruppe ausgewählt ist, die einerseits Phenoxysäuren, insbesondere 4- und 3-Chlorphenoxy-essigsäure, 2,4-D, MCPA, Mecoprop and Dichlorprop sowie deren rechtsdrehenden Isomere, in Form von Estern der Gruppe, welche jene von Butylglykol, 2-Ethylhexanol, Isooctanol und von $C_8$ Alkoholen umfaßt, sowie andererseits Fluazifop-p-butyl, Metolachlor, Pretilachlor, Sethoxydim, Tebutam umfaßt, und/oder
   c) mit Hilfe eines grenzflächenaktiven Mittels, welches von der Gruppe ausgewählt ist, welche umfaßt:

   - die nichtionischen grenzflächenaktiven Mittel, welche durch Umsetzung von Ethylenoxid und/oder Propylenoxid mit Fettalkoholen, Alkylphenolen, Tristyrylphenolen, Fettamiden, erhalten werden,
   - die anionischen grenzflächenaktiven Mittel, welche die Sulfon-, Sulfat- oder Phosphorhaltigen Derivate der vorgenannten nichtionischen grenzflächenaktiven Mittel sind, welche gegebenenfalls durch aliphatische Amine, Alkanolamine oder Natrium- oder Kaliumhydroxid neutralisiert sind,
   - das Calciumdodecylbenzolsulfonat, die Calciumalkylbenzolsulfonate mit einer $C_{12}$-$C_{18}$-Alkylkette, die Natrium- oder Calciumalkylnaphthalinsulfonate, die Natrium-, Calcium- oder Ammoniumlignosulfonate, die Formaldehyd/Kresol/Betanaphtolsulfonat-Kondensate und/oder

   d) durch Vermischen mit einer festen wirksamen Substanz, die geeignet ist, mit ihr ein Eutektikum auszubilden, welches zu den Kombinationen der Gruppe führt die umfaßt:

   - jene aus Bromoxyniloctanoat und Bromoxynilbutyrat in einer Menge von 60 Gew.-% bzw. 40 Gew.-%,

wobei der Schmelzpunkt 25°C beträgt,

- jene aus Bromoxynilheptanoat und Bromoxynilbutyrat in einer Menge von 70 Gew.-% bzw. 30 Gew.-%, wobei der Schmelzpunkt 26°C beträgt,
- jene aus Bromoxyniloctanoat und Bromoxypilheptanoat in einer Menge von 50 Gew.-% bzw. 50 Gew.-%, wobei der Schmelzpunkt 26°C beträgt.

4. Benetzbares Pulver einem der Ansprüche 1 bis 3, dadurch gekennzeichnet, daß in der flüssigen Zusammensetzung das Lösungsmittel und/oder die flüssige wirksame Substanz, welche zur Verflüssigung ausgewählt ist, in einer Menge von höchstens 50 Gew.-% und vorzugsweise von höchstens 25 Gew.-%, vorhanden sind, wobei das grenzflächenaktive Mittel in einer Menge von höchstens 20 Gew.-% und vorzugsweise in einer Menge von 5 bis 10 Gew.-% vorliegt, bezogen auf das Gesamtgewicht der flüssigen Zusammensetzung.

5. Benetzbares Pulver einem der Ansprüche 1 bis 4, dadurch gekennzeichnet, daß es 1 bis 50 Gew.-% und vorzugsweise 10 bis 25 Gew.-% wenigstens einer herbiziden wirksamen Substanz enthält.

6. Benetzbares Pulver einem der Ansprüche 1 bis 5, dadurch gekennzeichnet, daß der inerte Feststoff von der Gruppe ausgewählt ist, welche Siliziumdioxide und Tone, insbesondere jene, welche unter den Marken Tix-O-Sil 38$^®$ und Argirec B 22$^®$ bekannt sind, umfaßt.

7. Benetzbares Pulver einem der Ansprüche 1 bis 6, dadurch gekennzeichnet, daß es wenigstens einen inerten pulverförmigen Füllstoff in einer Menge von 30 bis 95 Gew.-%, bezogen auf das Gesamtgewicht des benetzbaren Pulvers, enthält.

8. Verfahren zur Herstellung eines benetzbaren herbiziden Pulvers, dadurch gekennzeichnet, daß man eine flüssige Zusammensetzung bildet durch Verflüssigen von zumindest einer herbiziden wirksamen Substanz ausgewählt von der Gruppe umfassend:

- die herbiziden Ester der Familie der Parahydroxybenzonitrile,
- die herbiziden Triazine,
- die herbiziden Dinitroaniline,
- die herbiziden substituierten Harnstoffe und
- die herbiziden Sulfonylharnstoffe,

mit Hilfe eines Lösungsmittels und/oder einer flüssigen wirksamen Substanz und/oder eines grenzflächenaktiven Mittels und/oder durch Vermischen mit einer anderen festen wirksamen Substanz, wobei die flüssige Zusammensetzung auf die Teilchen eines inerten pulverförmigen Füllstoffes aufgebracht wird.

9. Verfahren zur Herstellung eines benetzbaren herbiziden Pulvers nach Anspruch 8, dadurch gekennzeichnet, daß die wirksame Substanz von der Gruppe ausgewählt ist, die:

- die herbiziden Ester der Familie der Parahydroxybenzonitrile der Gruppe bestehend aus Bromoxyniloctanoat, Bromoxynilheptanoat, Bromoxynilbutyrat, Ioxyniloctanoat, Ioxynilheptanoat, Ioxynilbutyrat,
- die herbiziden Triazine der Gruppe bestehend aus Simazin, Atrazin und Ametryn,
- die herbiziden Dinitroaniline der Gruppe bestehend aus Butralin, Pendimethalin, Trifluralin, Orizalin,
- die herbiziden substituieren Harnstoffe der Gruppe bestehend aus Diuron, Isoproturon, Ethidimuron und
- Chlorsulfuron,

umfaßt.